# EUROPEAN PATENT SPECIFICATION

(11) **EP 2 352 254 B1**
(45) Date of publication and mention of the grant of the patent: **20.12.2017**
(21) Application number: 09822984.2
(22) Date of filing: 07.01.2009
(51) Int. Cl.: H04L 12/24, H04J 3/16, H04Q 11/00

(54) **METHOD AND APPARATUS FOR TRANSMITTING PHYSICAL LAYER OPERATIONS ADMINISTRATION AND MAINTENANCE MESSAGE**
VERFAHREN UND VORRICHTUNG ZUR ÜBERTRAGUNG EINER MELDUNG IM ZUSAMMENHANG MIT DER BETRIEBSVERWALTUNG UND WARTUNG DER PHYSIKALISCHEN SCHICHT
PROCÉDÉ ET APPAREIL D ÉMISSION D UN MESSAGE D ADMINISTRATION DES OPÉRATIONS ET DE MAINTENANCE DE LA COUCHE PHYSIQUE

(30) Priority: 27.10.2008 CN 200810175116
(43) Date of publication of application: 03.08.2011
(73) Proprietor: ZTE Corporation, Shenzhen, Guangdong 518057 (CN)
(72) Inventor: ZHANG, Weiliang, Guangdong 518057 (CN)
(74) Representative: Stöckeler, Ferdinand
(86) International application number: PCT/CN2009/070068
(87) International publication number: WO 2010/048791

(56) References cited:
- EP-A1- 1 096 731
- EP-A2- 1 179 965
- CN-A- 101 257 347
- CN-A- 101 291 179
- US-A1- 2004 208 631
- CHENHONGGUI ET AL.: 'The GTC layer design of ONU in GPON system' OPTICAL COMMUNICATION TECHNOLOGY January 2007, pages 17 - 19, XP008140540

## Description

### Field of the invention

The present invention relates to the communication field, and in particular to a method and an apparatus for transmitting a physical layer operations administration and maintenance (PLOAM) message of a passive optical network.

### Background of the invention

A gigabit passive optical network (GPON) system generally consists of optical line terminal(s) (OLT), optical network unit(s) (ONU) and an optical distribution network (ODN). The ODN is generally in a point-to-multipoint structure; and an OLT is connected to a plurality of ONUs by the ODN.

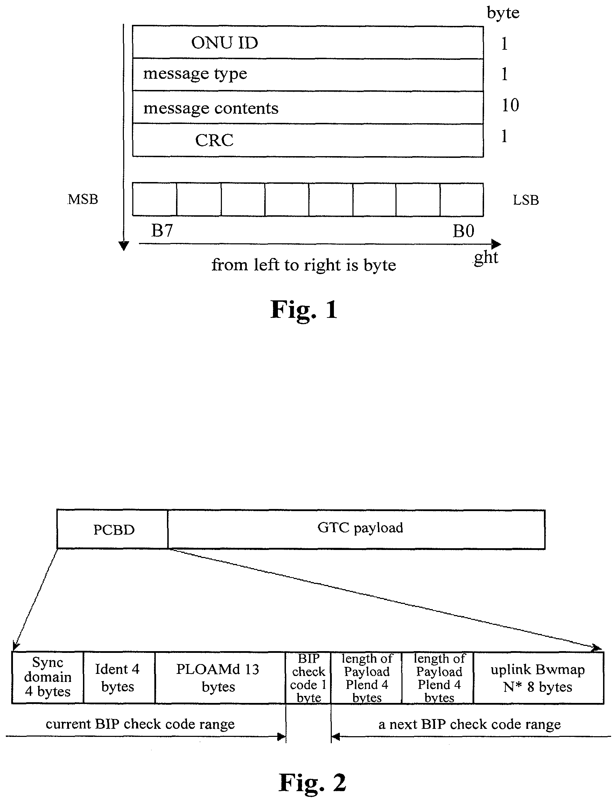

The GPON system can perform an administration operation between the ONU(s) and OLT(s) of a transmission convergence layer by the PLOAM message. Fig. 1 shows a schematic diagram of the format of the PLOAM message. As shown in Fig. 1, the fixed length of the message is 13 bytes, in which ONU ID occupies 1 byte, a message type (message ID) occupies 1 byte, message contents (data) occupy 10 bytes, and cyclic redundancy check (CRC) occupies 1 byte.

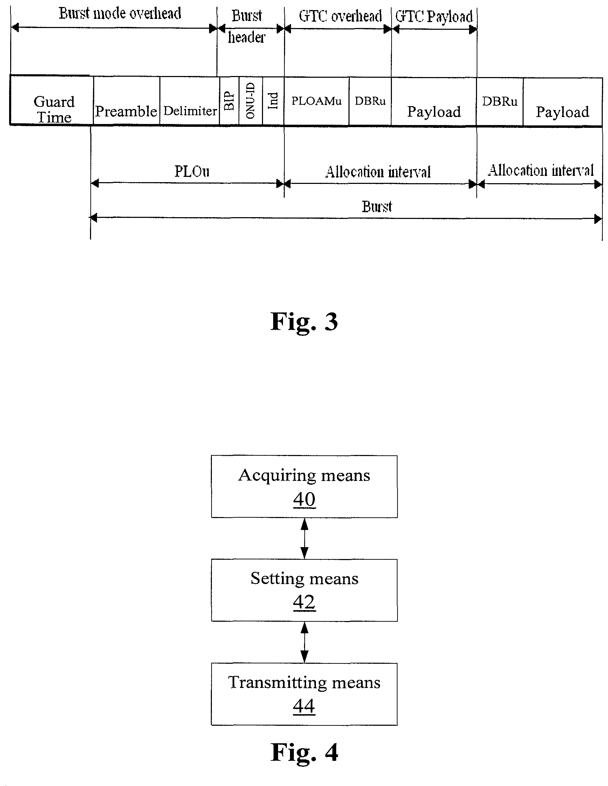

The PLOAM message is transmitted in a GPON transmission convergence (GTC) frame. Fig. 2 shows the structure of a downlink GTC frame, which includes a physical control block downlink (PCBD) and a GTC payload, wherein PLOAMd represents a downlink PLOAM and occupies 13 bytes. Fig. 3 shows the structure of an uplink GTC frame, which includes: a burst mode overhead, a burst header, a GTC overhead, and a GTC payload, wherein PLOAMu represents an uplink PLOAM and is optionally transmitted in the uplink GTC frame.

Currently, the PLOAM messages can be divided into the following three types according to the length of the message contents.
1. The PLOAM message with short message contents which is less than 10 bytes. For example, the PLOAM message, Encrypted_Port-ID shown in Table 1, is adapted to configure whether a GEM-PORT is encrypted; the message contents of the message occupy 3 bytes; and the message includes three parts of an octet, a content and a description.
2. The PLOAM message with no message contents. For example, the PLOAM message, Request_Key shown in Table 2, is adapted to notify ONU(s) to generate and transmit a new key; the message contents of the message occupy 0 bytes; and the message includes three parts of an octet, a content and a description.
For the above two types of the messages, although the length of the message contents is less than 10 bytes, the remaining bytes cannot bear other contents, therefore, the waste of bandwidth is caused.

**Table 1. Encrypted_Port-ID Message**

| **Encrypted_Port-ID message** | | |
|---|---|---|
| **Octet** | **Content** | **Description** |
| 1 | ONU-ID | Directed message to one ONU |
| 2 | 00001000 | Message identification "Encrypted_Port-ID" |
| 3 | xxxxxxba | a = 1: Encrypted |
| | | a = 0: Not Encrypted |
| | | b = 1. If b = 0, message should be ignored by the ONU. |
| 4 | abcdefgh | abcdefgh = Port-ID[11..4] |
| 5 | ijkl0000 | ijkl = Port-ID[3..0] |
| 6 | Unspecified | |
| 7 | Unspecified | |
| 8-12 | Unspecified | |

**Table 2. Request_Key Message**

| **Request_Key message** | | |
|---|---|---|
| **Octet** | **Content** | **Description** |
| 1 | ONU-ID | Directed message to one ONU |
| 2 | 00001101 | Message identification "Request_Key" |
| 3-12 | Unspecified | |

3. The PLOAM message with long message contents which is more than 10 bytes and must be transmitted by a plurality of PLOAM messages. For example, the PLOAM message, Encryption_Key shown in Table 3, includes three parts of an octet, a content and a description, and is adapted to transmit a new key (the length of the key is 16 bytes) from an ONU to an OLT; therefore, a key needs to be transmitted in two fragments and each of the two fragments is transmitted via an Encryption_Key message and specified.

Since each of the GTC frames sends a PLOAM message at most in the GPON system, the information with the message contents of more than 10 bytes must be sent by several times, which surely prolongs the time of interaction and reduce the reliability of the interaction.

**Table 3. Encryption_Key Message**

| **Octet** | **Content** | **Description** |
|---|---|---|
| 1 | ONU-ID | Indicates the ONU sourcing this message |
| 2 | 00000101 | Message identification "Encryption_Key message" |
| 3 | Key_Index | Index indicating which ONU key this message carries |
| 4 | Frag_Index | Index indicating which part of the key this message carries (Note) |
| 5 | KeyBYTEO | Byte 0 of fragment (Frag_Index) of Key (Key_Index) |
| 6 | KeyBYTE1 | Byte 1 of fragment (Frag_Index) of Key (Key_Index) |
| 7 | KeyBYTE2 | Byte 2 of fragment (Frag_Index) of Key (Key_Index) |
| 8 | KeyBYTE3 | Byte 3 of fragment (Frag_Index) of Key (Key_Index) |
| 9 | KeyBYTE4 | Byte 4 of fragment (Frag_Index) of Key (Key_Index) |
| 10 | KeyBYTE5 | Byte 5 of fragment (Frag_Index) of Key (Key_Index) |
| 11 | KeyBYTE6 | Byte 6 of fragment (Frag_Index) of Key (Key_Index) |
| 12 | KeyBYTE7 | Byte 7 of fragment (Frag_Index) of Key (Key_Index) |

It can be concluded from the above that the PLOAM message in the current GPON systems is not flexible in format; and many problems such as wasting the bandwidth, prolonging the time for interacting message, and reducing the reliability of message interaction exist.

US 2004/208631 A1, EP 1 096 731 A1 and EP 1 179 965 A1 provide respective technical solutions; however, the above mentioned problem still remains unsolved.

### Summary of the Invention

For the problems of wasting the bandwidth, prolonging the time for interacting message, and reducing the reliability of message interaction resulted from that the PLOAM message is not flexible in format in the prior art, the present invention aims to provide an improved solution for transmitting the PLOAM message to solve at least one of the above problems.

A method for transmitting a PLOAM message is provided according to one aspect of the present invention, including: splicing multiple messages with a sum of the length of message contents less than a predetermined length into a message group by a predetermined manner, and transmitting the message group in a gigabit passive optical network transmission convergence frame.

A method for transmitting a PLOAM message is provided according to another aspect of the present invention, including: dividing a message with a length of message contents greater than a predetermined length into multiple message fragments, splicing the multiple message fragments into a message group by a predetermined manner, and sending the message group in a gigabit passive optical network transmission convergence frame.

An apparatus for transmitting a PLOAM message is provided according to another aspect of the present invention, including: an acquiring means, configured to acquire multiple messages with a sum of the length of message contents less than a predetermined length; a setting means, configured to set the multiple messages acquired by the acquiring means as a message group in a predetermined manner; and a transmitting means configured to transmit the message group in a gigabit passive optical network transmission convergence frame.

An apparatus for transmitting a PLOAM message is provided according to another aspect of the present invention, including: a dividing means, configured to divide a message with a length of message contents greater than a predetermined length into multiple message fragments; a setting means, configured to set the multiple message fragments in the dividing means as a message group in a predetermined manner; and a transmitting means, configured to transmit the message group in a gigabit passive optical network transmission convergence frame.

By means of at least one of the above technical solutions, the present invention makes the PLOAM message more flexible in format by splicing multiple messages with a sum of the length of message contents less than a predetermined length into a message group, or dividing a message with the length of the message contents greater than a predetermined length into multiple message fragments and splicing the multiple message fragments into a message group, so that the problems of wasting the bandwidth, prolonging the time for interacting message, and reducing the reliability of message interaction in the prior art are solved, therefore, the occupation of bandwidth is effectively reduced, the time of message interaction is reduced, and the reliability of the message interaction is improved.

The other characteristics and advantages of the present invention will be described in details hereinafter and partly obvious in the specification, or understood by implementing the present invention. The object and the other advantages of the present invention will be realized and obtained by the structure specified by the written specification, claims and the accompany drawings.

### Brief description of the drawings

The drawings illustrated here provide a further understanding of the present invention and form a part of the present application. The exemplary embodiments and the description thereof are used to explain the present invention without unduly limiting the scope of the present invention, wherein:
Fig. 1 is a schematic diagram of the format of a PLOAM message in a GPON system in the related art;
Fig. 2 is a schematic diagram of the structure of a downlink GTC frame in the GPON system in the related art;
Fig. 3 is a schematic diagram of the structure of an uplink GTC frame in the GPON system in the related art;
Fig. 4 is a block diagram of an apparatus for transmitting message of Embodiment 4 of the present invention; and
Fig. 5 is a block diagram of an apparatus for transmitting message of Embodiment 5 of the invention.

### Detailed description of embodiments

### Function Overview

In the embodiments of the present invention, multiple messages with a sum of the length of message contents less than a predetermined length are spliced in a message group, or each message fragment with the length of message contents greater than the predetermined length is spliced in a message group, so that the message group can be transmitted in a GTC frame. Comparing with the prior art, the embodiments of the present invention can avoid the waste of bandwidth, reduce the time for interacting message and improve the reliability of message interaction.

The present invention will be described in detail with reference to the drawings and the embodiments hereinafter. It should be noted that the preferred embodiments described herein is merely used to describe and explain the present invention without unduly limiting the present invention. It should be explained that the embodiments of the present application and the features thereof can be combined with each other if they are not conflicted.

### Embodiment 1

In this embodiment, for the problems caused by transmitting the first and second types of the PLOAM messages in the prior art, a method for transmitting the PLOAM message is provided: splicing multiple messages with a sum of the length of message contents less than a predetermined length into a message group, and transmitting the message group in a GPON transmission convergence frame.

Preferably, the predetermined length herein is the length of message contents (DATA) in the set format of the PLOAM message in the prior art and is 10 bytes.

It should be noted that the present embodiment is not only adapted to the GPON system but also the next-generation PON developed on the basis of the GPON. In addition, the PLOAM message in the GPON system has a message format length of 13 bytes and a length of the message contents of 10 bytes. This embodiment does not limit the length of PLOAM message format and the length of each of the contents in the PLOAM message, and if extended, the PLOAM message format of the next-generation PON developed on the basis of the GPON is still adapted in the present embodiment.

In this embodiment, multiple PLOAM messages with short message contents and the sum of the message contents less than 10 bytes can be spliced in a PLOAM message of 13 bytes and be sent in a GTC frame as a PLOAM message group, in which the splicing manner (i.e., the predetermined manner above) can include but not limited to the following manners.

Manner 1: PLOAM related contents of the multiple messages are sequentially set in the message group, that is, the multiple PLOAM messages are spliced in a way of the format of a complete PLOAM message, in which each of the PLOAM message includes a complete ONU ID, a message ID, DATA and a CRC.

Table 4 shows a splicing manner of the complete PLOAM messages according to the present invention. As shown in Table 4, the splicing of two PLOAM messages in a complete format is shown, in which ONU ID1, message ID1, Data1, and CRC1 represent a first PLOAM message, and ONU ID2, message ID2, Data2, and CRC2 represent a second PLOAM message.

**Table 4. Splicing Manner of the Complete PLOAM Messages**

| |
|---|
| ONU ID1 |
| Message ID 1 |
| Data1 |
| CRC1 |
| ONU ID2 |
| Message ID2 |
| Data2 |
| CRC2 |

It should be explained that the splicing of more PLOAM messages in the complete format is still adapted in the present embodiment. The multiple PLOAM messages spliced in this manner can be intercepted and sent in multiple PLOAM message groups.

Manner 2: A common check code of the multiple messages is set in the message group, and PLOAM related contents of the multiple messages, except for the common check code, are set for each of the messages; i.e., the PLOAM messages sharing a CRC are spliced, wherein each of the PLOAM messages includes an ONU ID, a message ID, and Data, and all the spliced PLOAM messages share a CRC.

Table 5 shows a splicing manner of the PLOAM messages with a common CRC according to the present invention. As shown in Table 5, the splicing of two PLOAM messages sharing a CRC is shown, wherein (ONU ID1, message ID1 and Data1) represents a first PLOAM message, (ONU ID2, message ID2 and data2) represents a second PLOAM message, and these two PLOAM messages share the CRC following the second PLOAM message.

**Table 5. Splicing Manner of the PLOAM Messages Sharing a CRC**

| |
|---|
| ONU ID1 |
| Message ID 1 |
| Data1 |
| ONU ID2 |
| Message ID2 |
| Data2 |
| CRC |

For example, in the current GPON system, the OLT and ONU need to change the key periodically to ensure the security of information interaction, specifically, the OLT initiates a key updating process by sending a Request_Key message to the ONU, wherein the Request_Key message is the above PLOAM message of the second type.

Multiple Request_Key messages are spliced in the splicing manner of sharing a CRC shown in Table 6, and sent to different ONUs respectively. As shown in Fig. 6, the 1st and 2nd bytes represent the Request_Key message sent to ONU1; the 3rd and 4th bytes represent the Request_Key message sent to ONU2; the 5th and 6th bytes represent the Request_Key message sent to ONU3; the 7th and 8th bytes represent the Request_Key message sent to ONU4; the 9th and 10th bytes represent the Request_Key message sent to ONU5; the 11th and 12th bytes represent the Request_Key message sent to ONU6; and the 13th byte represents the CRC shared by the six Request_Key messages.

**Table 6. Splicing Manner of the Multiple Request_Key Messages**

| **Request_Key messages** | | |
|---|---|---|
| **Octet** | **Content** | **Description** |
| 1 | ONU-ID1 | Directed message to one ONU1 |
| 2 | 00001101 | Message identification "Request_Key" |
| 3 | ONU-ID2 | Directed message to one ONU2 |
| 4 | 00001101 | Message identification "Request_Key" |
| 5 | ONU-ID3 | Directed message to one ONU3 |
| 6 | 00001101 | Message identification "Request_Key" |
| 7 | ONU-ID4 | Directed message to one ONU4 |
| 8 | 00001101 | Message identification "Request_Key" |
| 9 | ONU-ID5 | Directed message to one ONU5 |
| 10 | 00001101 | Message identification "Request_Key" |
| 11 | ONU-ID6 | Directed message to one ONU6 |
| 12 | 00001101 | Message identification "Request_Key" |
| 13 | CRC | |

It should be noted that the splicing of more PLOAM messages sharing more CRC still adapted in the present embodiment. Those skilled in the art can easily splice more PLOAM messages sharing the CRC according to the above description; and no more description will be given here.

Manner 3: A common check code and a common destination address of the multiple messages are set in the message group, and PLOAM contents of the multiple messages, except the common check code and the common destination address, are set for each of the messages; i.e., the PLOAM messages sharing the ONU ID and the CRC are spliced, wherein each of the PLOAM messages includes a message ID and Data, and all the spliced PLOAM messages share an ONU ID and a CRC.

Table 7 shows a splicing manner of the PLOAM messages sharing an ONU ID and a CRC according to present invention. As shown in Table 7, two PLOAM messages are spliced in the splicing manner of sharing an ONU ID and a CRC, wherein (message ID1 and Data 1) is a first PLOAM message; (message ID2 and Data 2) is a second PLOAM message; and the two PLOAM messages share an ONU ID and a CRC.

**Table 7. Splicing Manner of the PLOAM Messages Sharing an ONU ID and a CRC**

| |
|---|
| ONU ID |
| Message ID 1 |
| Data1 |
| Message ID2 |
| Data2 |
| CRC |

For example, in the current GPON system, an OLT can configure a specific GEM-PORT as an encryption mode by a PLOAM message (Encrypted_Port-ID), and then sends another PLOAM message (Request_Key) to make an ONU generate a new key, wherein the Encrypted_Port-ID message is the above PLOAM message of the first type; and the Request_Key message is the above PLOAM message of the second type.

The PLOAM messages of Encrypted_Port-ID and Request_Key are spliced in the splicing manner of the PLOAM messages sharing an ONU ID and a CRC shown in Table 8. As shown in Table 8, the 1st byte (ONU ID) is the common destination ONU ID of the Encrypted_Port-ID and the Request_Key messages; the 2nd to 5th bytes are the message contents of the Encrypted_Port-ID message; the 6th byte is the message contents of the Request_Key message; the 7th to 12th bytes are reserved bytes; and the 13th byte is the common CRC of the Encrypted_Port-ID and the Request_Key messages.

**Table 8. Splicing Manner of Encrypted_Port-ID and Request_Key messages**

| **Encrypted Port-ID & Request_Key message** | | |
|---|---|---|
| **Octet** | **Content** | **Description** |
| 1 | ONU-ID | Directed message to one ONU |
| 2 | 00001000 | Message identification "Encrypted _Port-ID" |
| 3 | Xxxxxxba | a = 1: Encrypted |
| | | a = 0: Not Encrypted |
| | | b = 1. If b = 0, message should be ignored by the ONU. |
| 4 | Abcdefgh | abcdefgh = Port-ID [11..4] |
| 5 | ijkl0000 | ijkl = Port-ID[3..0] |
| 6 | 00001101 | Message identification "Request_Key" |
| 7 | Unspecified | |
| 8-12 | Unspecified | |
| 13 | CRC | |

It should be noted that the splicing of more PLOAM messages sharing an ONU ID and a CRC is still adapted in the present embodiment.

In the above three splicing manners, since multiple PLOAM messages share an ONU ID in the third manner, the destination address of the multiple PLOAM messages in the third manner should be the same one, however no such limitation is defined in the first and second manners.

It can be concluded from the above description that, compared with the prior art, the bearing contents of the message is increased and the occupation of bandwidth is saved in the embodiment of the present invention by splicing the messages with the length of the message contents less than the predetermined length in a message group for transmission.

### Embodiment 2

In the present embodiment, for solving the problem caused by transmitting the PLOAM message of the third type, a method for transmitting a PLOAM message is provided: dividing a message with a length of message contents greater than a predetermined length into multiple message fragments, splicing the multiple message fragments into a message group by a predetermined manner, and sending the message group in a GPON transmission convergence frame.

That is, for the multiple PLOAM messages generated due to longer message contents (over 10 bytes), the generated multiple PLOAM messages are spliced in a PLOAM message group and then sent in a GTC frame.

For example, in the current GPON system, the length of the message contents of a new key sent from an ONU to an OLT is 16 bytes, so it is necessary to divide the message into two PLOAM messages in the prior art, wherein each of the PLOAM messages is sent in a GTC frame, and the message needs to be transmitted for two times.

In this embodiment, the two PLOAM messages of the key are sent in a GTC frame and spliced. As shown in Table 9, the 1st to 13th bytes represent a first Encryption_Key message; the 14th to 26th bytes represent a second Encryption_Key message; and the two Encryption_Key messages are sent in an uplink GTC frame at the same time.

**Table 9. Two key PLOAM Messages Sent in a GTC Frame**

| **Encryption_Key messages** | | |
|---|---|---|
| **Octet** | **Content** | **Description** |
| 1 | ONU-ID | Indicates the ONU sourcing this message |
| 2 | 00000101 | Message identification "Encryption_Key message" |
| 3 | Key_Index | Index indicating which ONU key this message carries |
| 4 | Frag_Index = 1 | Index indicating which part of the key this message carries (Note) |
| 5 | KeyBYTE0 | Byte 0 of fragment (Frag_Index) of Key (Key_Index) |
| 6 | KeyBYTE1 | Byte 1 of fragment (Frag_Index) of Key (Key_Index) |
| 7 | KeyBYTE2 | Byte 2 of fragment (Frag_Index) of Key (Key_Index) |
| 8 | KeyBYTE3 | Byte 3 of fragment (Frag_Index) of Key (Key_Index) |
| 9 | KeyBYTE4 | Byte 4 of fragment (Frag_Index) of Key (Key_Index) |
| 10 | KeyBYTE5 | Byte 5 of fragment (Frag_Index) of Key (Key_Index) |
| 11 | KeyBYTE6 | Byte 6 of fragment (Frag_Index) of Key (Key_Index) |
| 12 | KeyBYTE7 | Byte 7 of fragment (Frag_Index) of Key (Key_Index) |
| 13 | CRC | |
| 14 | ONU-ID | Indicates the ONU sourcing this message |
| 15 | 00000101 | Message identification "Encryption_Key message" |
| 16 | Key_Index | Index indicating which ONU key this message carries |
| 17 | Frag_Index = 2 | Index indicating which part of the key this message carries (Note) |
| 18 | KeyBYTE0 | Byte 0 of fragment (Frag_Index) of Key (Key_Index) |
| 19 | KeyBYTE1 | Byte 1 of fragment (Frag_Index) of Key (Key_Index) |
| 20 | KeyBYTE2 | Byte 2 of fragment (Frag_Index) of Key (Key_Index) |
| 21 | KeyBYTE3 | Byte 3 of fragment (Frag_Index) of Key (Key_Index) |
| 22 | KeyBYTE4 | Byte 4 of fragment (Frag_Index) of Key (Key_Index) |
| 23 | KeyBYTE5 | Byte 5 of fragment (Frag_Index) of Key (Key_Index) |
| 24 | KeyBYTE6 | Byte 6 of fragment (Frag_Index) of Key (Key_Index) |
| 25 | KeyBYTE7 | Byte 7 of fragment (Frag_Index) of Key (Key_Index) |
| 26 | CRC | |

In the above description, multiple PLOAM messages generated due to longer message contents are spliced in a PLOAM message group and sent in a GTC frame; therefore, the embodiment, compared with the prior art in which multiple PLOAM messages need to be sent in multiple GTC frames for many times, can reduce the time of message interaction and improve the reliability of the message interaction.

### Embodiment 3

In this embodiment, an extended PLOAM message is provided and applied to the above embodiment 2. Multiple related PLOAM messages in a predetermined format can be spliced in the extended PLOAM message, wherein the predetermined format can be preferably the format of the PLOAM messages in the prior art, i.e., including an ONU ID, a message ID, Data and a CRC.

As described in the embodiment 2, in the prior art, a PLOAM message with long message contents (over 10 bytes) needs to be divided into multiple PLOAM messages. Since one PLOAM message can only be sent in one frame, the PLOAM message with the long message contents needs to be sent for many times in order to be sent to an opposite end.

In this embodiment, since the length of the PLOAM message is extended, which make the above multiple divided PLOAM messages can be spliced in the extended PLOAM message, the PLOAM message with the long message contents can be sent to an opposite end by only sending the extended PLOAM message in an uplink GTC frame for one time. By the extended PLOAM message, the time of message interaction is reduced and the reliability of message the interaction is improved.

### Embodiment 4

In this embodiment, an apparatus for transmitting a PLOAM message is provided and adapt to implement the method in the above embodiment 1. Fig. 4 is a block diagram of the apparatus of the present embodiment. The apparatus will be described with reference to Fig. 4 in detail hereinafter.

As shown in Fig. 4, the apparatus for transmitting the message includes: an acquiring means 40, a setting means 42 and a transmitting means 44. The functions of the means will be described respectively hereinafter.

The acquiring means 40 is configured to acquire multiple messages with a sum of the length of message contents less than a predetermined length; and preferably, the predetermined length herein is the length of DATA in the format of the PLOAM message in the prior art, which is 10 bytes;

The setting means 42, connected to the acquiring means 40, is configured to set the multiple messages acquired by the acquiring means as a message group in a predetermined manner.

In the above, the predetermined manner used by the setting means 42 may be the following manners.
Manner 1: PLOAM related contents of each of the messages in the message group are sequentially set.
Manner 2: A common check code of the multiple messages in the message group is set; and the PLOAM related contents, except the common check code of the multiple messages, are sequentially set for each of the messages.
Manner 3: A common destination address and the common check code of the multiple messages in the message group are set; and the PLOAM related contents, except the common destination address and the common check code of the multiple messages, are sequentially set for each of the messages.

The three manners have been described in detail in the above Embodiment 1 and need no further description herein.

The transmitting means 44, connected to the setting means 42, is configured to transmit the message group in the setting means 42 in a GPON transmission convergence frame.

It should be noted that all or any two of the acquiring means, setting means, and transmitting means can be combined, to which the present invention is not limited.

It can be concluded from the above description that, compared with the prior art, the bearing contents of the message are added and the occupation of bandwidth is saved by splicing the messages with message contents less than the predetermined length in a message group for transmission.

### Embodiment 5

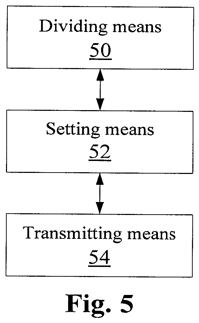

In this embodiment, an apparatus for transmitting a PLOAM message is provided and is used to implement the method in the above embodiment 2. Fig. 5 is a block diagram of the apparatus of the present embodiment. The apparatus will be described with reference to Fig. 5 in detail hereinafter.

As shown in Fig. 5, the apparatus for transmitting message includes a dividing means 50, a setting means 52 and a transmitting means 54. The functions of the means will be described respectively hereinafter.

The dividing means 50 is configured to divide a message with the length of the message contents greater than a predetermined length into multiple message fragments. Similarly to that in the above Embodiments 1-4, preferably the predetermined length is the length of the DATA in the format of the PLOAM message in the prior art and is 10 bytes.

The setting means 52, connected to the dividing means 50, is configured to set the multiple message fragments in the dividing means as a message group in a predetermined manner. Preferably, each of the message fragments is loaded in message contents of the format of a PLOAM message in the predetermined manner, wherein the format of the PLOAM message sequentially carries the following information: an ONU ID (destination address), a Message ID (message type), Data (message contents) and a CRC (check code); and multiple formats of the PLOAM messages are sequentially arranged one by one to form the message group. The specific setting process is similar to that in the Embodiment 2 and needs no further description herein.

The transmitting means 54, connected to the setting means 52, is configured to transmit the message group in the setting means 52 in a GTC frame.

It should be noted that all or any two of the dividing means, setting means, and sending means can be combined, to which the invention is not limited.

In the above description, multiple PLOAM messages generated due to the longer message contents are spliced in a PLOAM message group and sent in a GTC frame; therefore, the embodiment, compared with the prior art in which multiple PLOAM messages need to be sent in multiple GTC frames for many times, can reduce the time of message interaction and improve the reliability of the message interaction.

To sum up, the bearing capability of the PLOAM message is improved and the utilization ratio of the bandwidth is increased by splicing PLOAM messages with less message contents in a PLOAM message for transmission; and the time of message interaction is reduced and the reliability of the message interaction is improved by splicing multiple related PLOAM messages generated due to the more message contents of a PLOAM message in an extended PLOAM message for transmission.

Obviously, those skilled in the art shall understand that individual steps of the present invention can be implemented with general computing devices, they may be integrated in a single computing device or distributed in network formed by a plurality of computing devices, optionally, they may be implemented by using program codes executable by computing devices, thus they may be stored in memory devices for execution by the computing devices, or implemented by making them into integrated circuit module respectively, or by making several means or steps in to a single IC. Thus, the present invention is not limited to any particular combination of hardware and software.

## Claims

1. A method for transmitting a physical layer operations administration and maintenance (PLOAM) message, said method comprising:
splicing multiple messages into a message group by a predetermined manner, wherein a sum of a length of content of the multiple messages is less than a predetermined length; or, splicing multiple message fragments into a message group by another predetermined manner, wherein the multiple message fragments are obtained by dividing a message, and a length of content of the message is greater than the predetermined length;
and transmitting the message group in one Gigabit Passive Optical Network Transmission Convergence, GTC, frame;
wherein the predetermined manner is one of following three manners:
sequentially setting PLOAM related contents of each of the messages in the message group, wherein the PLOAM related contents comprise: a destination address, a message type, the message contents and a check code;
sequentially setting PLOAM related contents of each of the messages in the message group, wherein the PLOAM related contents comprise: a destination address, a message type and the message contents; and setting a common check code of the multiple messages;
setting a PLOAM related common destination address and a PLOAM related common check code of the multiple messages in the message group, and sequentially setting PLOAM related contents for each of the messages; wherein the PLOAM related contents comprise: a message type and the message contents;
said another predetermined manner is:
loading each of the message fragments in message contents of the format of a PLOAM message, wherein the format of the PLOAM message sequentially carries the following information: a destination address, a message type, message contents, and a check code; and sequentially arranging multiple formats of the PLOAM messages one by one to form the message group.

2. The method according to any one of Claim 1, **characterized in that** the predetermined length is a fixed value and is 10 bytes in a gigabit passive optical network system.

3. The method according to any one of Claim 1, **characterized in that** the message group is loaded in the format of the PLOAM message and has a length not greater than the format length of the format of the PLOAM message.

4. An apparatus for transmitting a physical layer operations administration and maintenance (PLOAM) message, said apparatus comprising:
an acquiring means (40), configured to acquire multiple messages or multiple message fragments, wherein a sum of a length of content of the multiple messages is less than a predetermined length, the multiple message fragments are obtained by dividing a message, and a length of content of the message is greater than the predetermined length;
a setting means (42), configured to set the multiple messages acquired by the acquiring means in a predetermined manner, or the multiple message fragments acquired by the acquiring means in another predetermined manner, as a message group; and
a transmitting means (44), configured to transmit the message group in one Gigabit Passive Optical Network Transmission Convergence, GTC, frame;
wherein the predetermined manner is one of following three manners:
sequentially setting PLOAM related contents of each of the messages in the message group, wherein the PLOAM related contents comprise: a destination address, a message type, the message contents and a check code;
sequentially setting PLOAM related contents of each of the messages in the message group, wherein the PLOAM related contents comprise: a destination address, a message type and the message contents; and setting a common check code of the multiple messages;
setting a PLOAM related common destination address and a PLOAM related common check code of the multiple messages in the message group, and sequentially setting PLOAM related contents for each of the messages; wherein the PLOAM related contents comprise: a message type and the message contents;
said another predetermined manner is:.
loading each of the message fragments in message contents of the format of a PLOAM message, wherein the format of the PLOAM message sequentially carries the following information: a destination address, a message type, message contents, and a check code; and sequentially arranging multiple formats of the PLOAM messages one by one to form the message group.

## Patentansprüche

1. Ein Verfahren zum Übertragen einer Nachricht für Verwaltung und Wartung von Operationen einer physischen Schicht (PLOAM-Nachricht), wobei das Verfahren folgende Schritte aufweist:
Zusammenführen mehrerer Nachrichten durch eine vorbestimmte Weise in eine Nachrichtengruppe, wobei eine Summe einer Länge an Inhalt der mehreren Nachrichten kleiner ist als eine vorbestimmte Länge; oder Zusammenführen mehrerer Nachrichtenfragmente durch eine andere vorbestimmt Weise in eine Nachrichtengruppe, wobei die mehreren Nachrichtenfragmente durch Unterteilen einer Nachricht erhalten werden und eine Länge an Inhalt der Nachricht größer ist als die vorbestimmte Länge;
und Übertragen der Nachrichtengruppe in einem Rahmen für Übertragungskonvergenz eines passiven optischen Gigabit-Netzes, GTC-Rahmen;
wobei die vorbestimmte Weise eine der folgenden drei Weisen ist:
sequenzielles Einstellen PLOAM-bezogener Inhalte jeder der Nachrichten in der Nachrichtengruppe, wobei die PLOAM-bezogenen Inhalte eine Zieladresse, einen Nachrichtentyp, die Nachrichteninhalte und einen Prüfcode aufweisen;
sequenzielles Einstellen PLOAM-bezogener Inhalte jeder der Nachrichten in der Nachrichtengruppe, wobei die PLOAM-bezogenen Inhalte eine Zieladresse, einen Nachrichtentyp und die Nachrichteninhalte aufweisen; und Einstellen eines gemeinsamen Prüfcodes der mehreren Nachrichten;
Einstellen einer PLOAM-bezogenen gemeinsamen Zieladresse und eines PLOAM-bezogenen gemeinsamen Prüfcodes der mehreren Nachrichten in der Nachrichtengruppe und sequenzielles Einstellen PLOAM-bezogener Inhalte für jede der Nachrichten; wobei die PLOAM-bezogenen Inhalte einen Nachrichtentyp und die Nachrichteninhalte aufweisen;
wobei die weitere vorbestimmte Weise wie folgt ist:
Laden jedes der Nachrichtenfragmente in Nachrichteninhalten des Formats einer PLOAM-Nachricht, wobei das Format der PLOAM-Nachricht sequenziell die folgenden Informationen trägt: eine Zieladresse, einen Nachrichtentyp, Nachrichteninhalte und einen Prüfcode; und sequenzielles Anordnen mehrerer Formate der PLOAM-Nachrichten nacheinander und einzeln, um die Nachrichtengruppe zu bilden.

2. Das Verfahren gemäß Anspruch 1, das **dadurch gekennzeichnet ist, dass** die vorbestimmte Länge ein fester Wert ist und in dem Gigabit-Passiv-Optisches-Netz-System 10 Bytes beträgt.

3. Das Verfahren gemäß Anspruch 1, das **dadurch gekennzeichnet ist, dass** die Nachrichtengruppe in dem Format der PLOAM-Nachricht geladen wird und eine Länge aufweist, die nicht größer ist als die Formatlänge des Formats der PLOAM-Nachricht.

4. Eine Vorrichtung zum Übertragen einer Nachricht für Verwaltung und Wartung von Operationen einer physischen Schicht (PLOAM-Nachricht), wobei die Vorrichtung folgende Merkmale aufweist:
eine Erfassungseinrichtung (40), die ausgebildet ist, um mehrere Nachrichten oder mehrere Nachrichtenfragmente zu erfassen, wobei eine Summe einer Länge an Inhalt der mehreren Nachrichten kleiner ist als eine vorbestimmte Länge, die mehreren Nachrichtenfragmente durch Unterteilen einer Nachricht erhalten werden und eine Länge an Inhalt der Nachricht größer ist als die vorbestimmte Länge;
eine Einstelleinrichtung (42), die ausgebildet ist, um die mehreren Nachrichten, die durch die Erfassungseinrichtung erfasst werden, in einer vorbestimmten Weise oder die mehreren Nachrichtenfragmente, die durch die Erfassungseinrichtung erfasst werden, in einer anderen vorbestimmten Weise als eine Nachrichtengruppe einzustellen; und
eine Übertragungseinrichtung (44), die ausgebildet ist, um die Nachrichtengruppe in einem Rahmen für Übertragungskonvergenz eines passiven optischen Gigabit-Netzes, GTC-Rahmen, zu übertragen;
wobei die vorbestimmte Weise eine der folgenden drei Weisen ist:
sequenzielles Einstellen PLOAM-bezogener Inhalte jeder der Nachrichten in der Nachrichtengruppe, wobei die PLOAM-bezogenen Inhalte eine Zieladresse, einen Nachrichtentyp, die Nachrichteninhalte und einen Prüfcode aufweisen;
sequenzielles Einstellen PLOAM-bezogener Inhalte jeder der Nachrichten in der Nachrichtengruppe, wobei die PLOAM-bezogenen Inhalte eine Zieladresse, einen Nachrichtentyp und die Nachrichteninhalte aufweisen; und Einstellen eines gemeinsamen Prüfcodes der mehreren Nachrichten;
Einstellen einer PLOAM-bezogenen gemeinsamen Zieladresse und eines PLOAM-bezogenen gemeinsamen Prüfcodes der mehreren Nachrichten in der Nachrichtengruppe und sequenzielles Einstellen PLOAM-bezogener Inhalte für jede der Nachrichten; wobei die PLOAM-bezogenen Inhalte einen Nachrichtentyp und die Nachrichteninhalte aufweisen;
wobei die weitere vorbestimmte Weise wie folgt ist:
Laden jedes der Nachrichtenfragmente in Nachrichteninhalten des Formats einer PLOAM-Nachricht, wobei das Format der PLOAM-Nachricht sequenziell die folgenden Informationen trägt: eine Zieladresse, einen Nachrichtentyp, Nachrichteninhalte und einen Prüfcode; und sequenzielles Anordnen mehrerer Formate der PLOAM-Nachrichten nacheinander und einzeln, um die Nachrichtengruppe zu bilden.

## Revendications

1. Procédé pour transmettre un message d'administration et de maintien d'opérations de couche physique (PLOAM), ledit procédé comprenant le fait de:
coller de multiples messages dans un groupe de messages d'une manière prédéterminée, où une somme d'une longueur de contenu des multiples messages est inférieure à une longueur prédéterminée; ou coller de multiples fragments de message dans un groupe de messages d'une autre manière prédéterminée, où les multiples fragments de messages sont obtenus en divisant un message, et une longueur de contenu du message est supérieure à la longueur prédéterminée;
et transmettre le groupe de messages dans une trame de Convergence de Transmission par Réseau Optique Passif Gigabit, GTC;
dans lequel la manière prédéterminée est l'une des trois manières suivantes:
établir de manière séquentielle les contenus relatifs à PLOAM de chacun des messages dans le groupe de messages, où les contenus relatifs à PLOAM comprennent: une adresse de destination, un type de message, le contenu du message et un code de vérification;
établir de manière séquentielle les contenus relatifs à PLOAM de chacun des messages dans le groupe de messages, où les contenus liés à PLOAM comprennent: une adresse de destination, un type de message et le contenu du message; et établir un code de vérification commun des multiples messages;
établir une adresse de destination commune relative à PLOAM et un code de vérification commun relatif à PLOAM des multiples messages dans le groupe de messages, et établir de manière séquentielle les contenus relatifs à PLOAM pour chacun des messages; où les contenus relatifs à PLOAM comprennent: un type de message et le contenu du message;
ladite autre manière prédéterminée est:
charger chacun des fragments de message dans le contenu du message du format d'un message PLOAM, où le format du message PLOAM porte de manière séquentielle les informations suivantes: une adresse de destination, un type de message, un contenu de message et un code de vérification; et disposer de manière séquentielle de multiples formats des messages PLOAM un à un pour former le groupe de messages.

2. Procédé selon l'une quelconque de la revendication 1, **caractérisé par le fait que** la longueur prédéterminée est une valeur fixe et est de 10 octets dans un système de réseau optique passif gigabit.

3. Procédé selon l'une quelconque de la revendication 1, **caractérisé par le fait que** le groupe de messages est chargé dans le format du message PLOAM et présente une longueur non supérieure à la longueur de format du message PLOAM.

4. Appareil pour transmettre un message d'administration et de maintien d'opérations de couche physique (PLOAM), ledit appareil comprenant:
un moyen d'acquisition (40), configuré pour acquérir de multiples messages ou de multiples fragments de message, où une somme d'une longueur de contenu des multiples messages est inférieure à une longueur prédéterminée, les fragments de messages multiples sont obtenus en divisant un message, et une longueur de contenu du message est supérieure à la longueur prédéterminée;
un moyen d'établissement (42), configuré pour établir les multiples messages acquis par les moyens d'acquisition d'une manière prédéterminée, ou les multiples fragments de message acquis par les moyens d'acquisition d'une autre manière prédéterminée, comme groupe de messages; et
un moyen de transmission (44), configuré pour transmettre le groupe de messages dans une trame de Convergence de Transmission par Réseau Optique Passif Gigabit, GTC;
dans lequel la manière prédéterminée est l'une des trois manières suivantes:
établir de manière séquentielle les contenus relatifs à PLOAM de chacun des messages dans le groupe de messages, où les contenus relatifs à PLOAM comprennent: une adresse de destination, un type de message, le contenu du message et un code de vérification;
établir de manière séquentielle les contenus relatifs à PLOAM de chacun des messages dans le groupe de messages, où les contenus liés à PLOAM comprennent: une adresse de destination, un type de message et le contenu du message; et établir un code de vérification commun des multiples messages;
établir une adresse de destination commune relative à PLOAM et un code de vérification commun relatif à PLOAM des multiples messages dans le groupe de messages, et établir de manière séquentielle les contenus relatifs à PLOAM pour chacun des messages; où les contenus relatifs à PLOAM comprennent: un type de message et le contenu du message;
ladite autre manière prédéterminée est:
charger chacun des fragments de message dans le contenu du message du format d'un message PLOAM, où le format du message PLOAM porte de manière séquentielle les informations suivantes: une adresse de destination, un type de message, un contenu de message et un code de vérification; et disposer de manière séquentielle de multiples formats des messages PLOAM un à un pour former le groupe de messages.
